# EUROPEAN PATENT APPLICATION

(11) **EP 0 756 186 A1**
(43) Date of publication of application: **29.01.1997**
(21) Application number: 95202037.8
(22) Date of filing: 24.07.1995
(51) Int. Cl.: G02B 6/44, G02B 6/52, H02G 1/08

(54) **Method and device for installing cables**

(71) Applicant: Koninklijke PTT Nederland N.V., 2509 CH Den Haag (NL); PLUMETTAZ SA, 1880 Bex (CH)
(72) Inventor: Griffioen, Willem, NL-2416 XJ Ter Aar (NL); Wacinski, Andrzej Bogdan, c/o Plummetaz S.A., CH-1880 Bex (CH)

(57) **Abstract**

The invention pertains to a method of installing cables (55) in cable ducts (54) using installation devices (51) propelling the cables (55) into the ducts (54). In accordance with the invention, the installation devices (51) are powered by means of pressurized fluid (f), such as air, transported through the ducts (54). This results in a smaller nummer of compressors (52) and operators being necessary. The duct in which a cable is installed and/or parallel ducts may be used for transporting the pressurized fluid (f). The feed direction of the cable (=>) may coincide with, or be opposed to, the transport direction of the fluid (->). The invention further provides an installation device for use in the method.

## Description

### BACKGROUND OF THE INVENTION

The invention relates to a method for installing cables in cable ducts by means of installation devices arranged for exerting a propelling force on the cables, the ducts comprising duct sections, said method comprising the steps ofplacing installation devices at duct sections, and passing at least one cable through a duct by means of the installation devices. The invention also relates to devices for installing cables using the above-mentioned method. A method and device of this kind are known from European Patent EP 0 292 037 (Reference [1]).

In said European Patent, a method and a device are disclosed for installing cables by means of a combination of propelling forces, a first force being exerted by motor-driven wheels and a second force being exerted by fluid drag. Said Patent also mentions the use of a plurality of such devices for such devices for installing cables over langer distances (so called "tandem use").

In prior art techniques, such as disclosed in reference 1, each installation device is directly coupled to a source of pressurized fluid, such as a compressor. That is, as many compressors as installation devices are required. This is, however, disadvantageous for various reasons. Firstly, installation devices are often used in places where the presence of the compressor poses practical problems, e.g. in narrow streets or in small installation pits. Secondly, as often a number of installation devices is required to install cables over considerable lengths, the same number of compressors (or other sources of pressurized liquid) is required to install the cable, thus substantially increasing the cost of the method. As each compressor usually requires an operator, labour cost may also be substantial when installing cables over longer distances.

For example, the method of reference 1 may require four installation devices and thus four compressors to install a cable over a length of 2 km.

### SUMMARY OF THE INVENTION

An object of the present invention is to provide a method and device for installing cables which alleviate the above-mentioned and other problems of the prior art and which enable the efficient installation of cables at low costs. Another object of the present invention is to provide a method and device for installing cables which enable the efficient installation of cables even at locations where a compressor or other source of pressurized liquid (e.g. a gas flask) cannot be used.

Accordingly, a method of the kind mentioned in the preamble is in accordance with the present invention characterized by passing fluid through a duct in order to energize the installation devices.

The present invention is based on the insight that a cable propulsion means, such as a pneumatic motor, can be remotely powered. The present invention is based on the further insight that ducts can not only be used for accomodating cables, but also for transporting pressurized fluids (such as gases and liquids). It is of course possible to use separate, portable tubes or hoses which are installed along with the compressors to power these. Although this offers a feasible solution, the laying and subsequent removal of separate powering tubes constitutes an additional installation step which increases cost. It is, therefore, less expensive and more practical to utilize tubes which are already in place when the actual cable installation begins.

The invention is based on the further insight that the problem of powering installation devices in remote, distinct places exists and requires an efficient, inexpensive solution. By passing fluid through a duct in order to energize the installation devices, it becomes possible to remotely energize the installation devices.

The fluid and a cable may be passed through separate ducts or duct sections. Thus, a duct parallel to the duct (section) in which the cable is installed may be used for transporting the energizing fluid. This may offer the advantage of enabling a greater amount of fluid to be transported. However, the fluid and a cable may also be passed through the same duct or duct section, e.g. in the case only a single duct is present.

Preferably, an installation device is provided at the upstream end of each duct section, "upstream" meant with respect to the cable feed direction. Thus, installation devices are preferably placed between duct sections and at the beginning of the duct. It is, however, possible to feed cable through two or more duct sections using a single installation device.

The fluid used is preferably compressed air. However, other gases (such as nitrogen) or liquids (water, oil) may also be used.

With the present invention, at least two cables may be installed simultaneously by feeding the group of cables through an installation device simultaneously, or by placing two installation devices in parallel. In this text, the term "cable" or "cables" will be used to refer to a group of cables, said group consisting of one or more copper cables, fibre optic cables, reinforced optical fibre bundles, and the like.

In order to further the advancement of the cable in case the cable feed direction coincides with the fluid transport direction, the cable may be provided with a shuttle. Such a shuttle, as e.g. disclosed in reference [4], provides an additional pulling force.

A device for installing cables in accordance with the invention comprises propulsion means for propelling a cable, said propulsion means being arranged for being energized by means of pressurized fluid, said device further comprising bypass means for bypassing pressurized fluid to other devices.

### REFERENCES

[1] EP 0 292 037 & US 4 850 569
[2] EP 0 445 622
[3] JP 60-244 904
[4] EP 0 445 858 & US 5 197 715
These references are herewith incorporated in this text.

### BRIEF DESCRIPTION OF THE DRAWINGS

Fig. 1 shows schematically a first arrangement in which the method of the invention is deployed.

Fig. 2 shows schematically a second arrangement in which the method of the invention is deployed.

Fig. 3 shows schematically a first embodiment of an installation device according to the invention.

Fig. 4 shows schematically a second embodiment of an installation device according to the invention.

### DESCRIPTION OF PREFERRED EMBODIMENTS

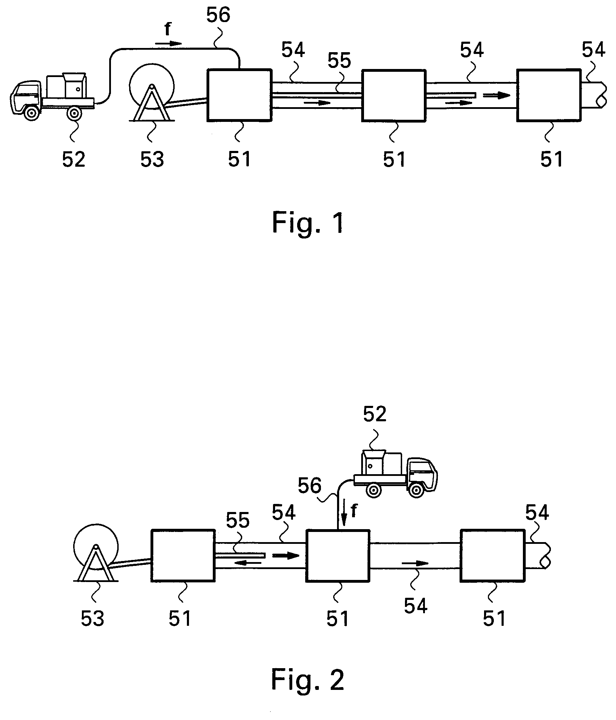

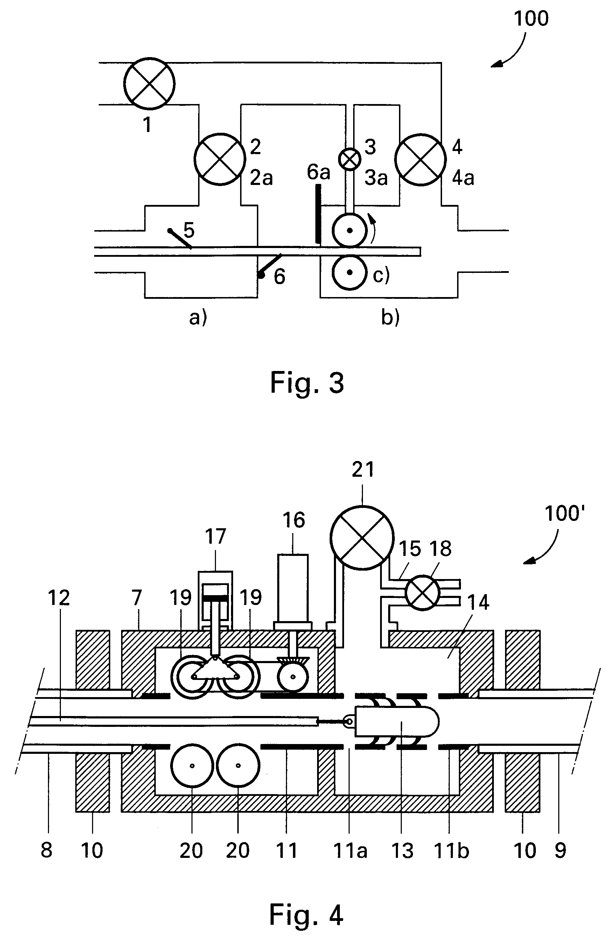

The system depicted schematically in Fig. 1 comprises a duct or conduit consisting of duct sections 54. A cable 55 is installed by means of installation devices 51. The cable 55 is taken off a reel 53 and fed into the first installation device 51. The cable feed direction (to the right in Fig. 1) is designated by a double arrow ( => ). The first installation device 51 is energized by pressurized air, fed to the first installation device (leftmost device in Fig. 1) by means of a tube 56. From the first installation device 51, pressurized air is fed to the second and third installation devices through the duct sections 54. The fluid (i.c. air) feed direction is indicated in Fig. 1 by a single arrow ( -> ). It will be understood that the duct sections are shown in Fig. 3 considerably shortened for the sake of clarity of the illustration.

As shown in Fig. 1, the air feed direction coincides with the cable feed direction. In this instance, the flow of air may exert an auxiliary propulsion force (air drag) if the air speed is high relative to the cable speed. This will especially be the case when the last (i.e. rightmost in Fig. 1) duct section has an open exhaust, i.e. when the end of the duct section is open to the atmosphere.

The system depicted schematically in Fig. 2 also comprises a duct consisting of duct sections 54. A cable 55 is installed by means of installation devices 51. The cable 55 is taken off a reel 53 and fed into the first (leftmost) installation device 51. Contrary to the system of Fig. 1, pressurized air (f) is fed from a compressor 52 via a tube 56 to the second (middle) installation device 51. From the second installation device 51, air is fed through a duct section 54 to the left, in the cable upstream direction, towards the first (leftmost) installation device 51. Air is also fed through a duct section 54 to the right, in the cable downstream direction, towards the third (rightmost) installation device 51. In the configuration of Fig. 2, fluid flows in one duct section contrary to the cable feed direction and in another duct section in the cable feed direction. As the air speed will be held low, the air drag caused by the air flowing contrary to the cable feed direction is negligible. The air speed can be held low by closing off the exhaust of the last duct section at least partially.

As stated above, in accordance with the invention the ducts or duct sections (54) are used as means for transporting energy for powering installation devices. Preferably, said energy is contained in pressurized fluids such as air, gas in general, water, or other liquids. Said compressor may be replaced by e.g. a pressurized gas container or a hydraulic pump.

The method of the present invention may also be employed in the case of a single installation device. In that case, an installation device may be placed at the upstream end of a duct, with respect to the cable feed direction, while the compressor may be placed at the downstream end. The fluid and the cable move accordingly in opposite directions, if they travel through the same duct. This configuration still results in the remote powering of the installation device via a duct.

The installation device 100, shown diagrammatically and by way of example in Fig. 3, comprises a receiving part a and an insertion part b shown in Fig. 3 as a) and b) respectively. Both parts a and b may be divisible so as to allow the device to be opened up and to place the device around a cable. The insertion part comprises a pneumatic motor c which is energized (powered) by means of pressurized air via the tubelet 3a. The drive wheels or drive tracks, which are powered by the motor and which propel the cable 12, can be pressed onto the cable pneumatically or by means of springs. Via the tube 4a pressurized air can be passed to the next installation unit. The receiving part a can receive pressurized air from the preceding duct (section) via tube 2a and pass this air to the pneumatic motor and/or the next duct (section).

It is also possible that the flow of pressurized air is reversed. In that case the tubes 2a and 4a interchange functions.

The valves 1, 2, 3 and 4 serve to lead the flow of air in the desired directions. These valves can be operated manually or automatically, preferably pneumatically. In the latter case a pneumatic switch 5, operated by the passing cable, may be used for control purposes. The valves 6 and 6a (shown as pivoting and sliding valves respectively) serve to maintain air pressure when the tubes and the installation unit are pressurized before the cable is passed through. Valve 6 may also be constituted as a "passive" valve, i.e. operated by the cable, closing off the receiving part a when blowing off air into the atmosphere. In that case the function of switch 5 may be integrated into the valve 6.

In principle the device 100 can be operated without the valves and switches mentioned. The connections of the tubes are in that case made manually when necessary.

The installation device 100', shown diagrammatically and by way of example in Fig. 4, is to a large extent similar to the device 100 of Fig. 3. However, the receiving part a and the insertion part b of Fig. 3 are integrated into one housing 7, which may also be divisible. The receiving and insertion tubes 8 and 9 respectively are fixed by means of clamps 10, so as to immobilize the tubes relative to the housing when under pressure (the clamps 10, as other details, are not shown in Fig. 3 for the sake of clarity).

Centrally located in the housing 7 is a cylindrical channel, constituted by a (partially perforated) tube 11, through which a cable 12 can be passed. The cable 12 shown in Fig. 4 is provided with a shuttle 13, which passes the holes in the tube 11 provided for the drive wheels 19 and 20 before the cable does. As this happens, the space where the drive wheels 19 and 20 are situated will quickly fill with pressurized air. In order to prevent distortion of the shuttle due to the pressure gradients, the tube 11 may have further perforations (not shown in Fig. 4) to the left of the said holes provided for the drive wheels 19 and 20.

As the shuttle has passed the first perforations 11a of the tube 11 (as shown in Fig. 4), gradually more air will flow into the air chamber 14 of the housing 7. This air will initially flow away through the perforations at 11b and leave the installation unit via the tube 9. Only when the shuttle 13 reaches the last perforations at 11b maximum pressure will build in the chamber 14. This pressure can be used to energize the pneumatic motor 16 and the press cylinder 17 via the tube 15 and the valve 18 (part of the tube 15 is not shown in Fig. 4). The perforations in the tube 11 should therefore be large enough to allow a sufficient flow of air towards the motor 16 and cylinder 17. By means of said perforations a gradual energizing of the installation unit is achieved.

Instead of the perforations, a single hole or slit (not shown in Fig. 4) may be provided in order to allow air to pass into the chamber 14.

The valve 18 can be used to turn the motor off. The cylinder 17 presses the drive wheels 19, which preferably are provided with grooves in order to enhance friction, downwards onto the cable 12. The opposite wheels 20 may be passive, i.e. may not driven, and may remain in position, i.e. may not be provided with a press cylinder. The pressure release valve 21 may be used to release excess pressure.

In summary, the invention provides a method of installing cables in (preferably previously installed) cable ducts using installation devices propelling the cables into the ducts. The propelling force is preferably exerted by driven wheels or the like, but may also be exerted by fluid drag. The installation devices are powered by means of pressurized fluid, such as air, transported through the ducts. The duct in which a cable is installed and/or one or more parallel ducts may be used for transporting the pressurized fluid. The feed direction of the cable may coincide with, or be opposed to, the transport direction of the fluid.

It will be understood by those skilled in the art that the embodiments described in the above are given by way of example only and that numerous additions and modification may be made without departing from the sprit and scope of the present invention.

## Claims

1. Method of installing cables in cable ducts by means of installation devices arranged for exerting a propelling force on the cables, the ducts comprising duct sections, said method comprising the steps of
- placing installation devices at duct sections, and
- passing at least one cable through a duct by means of the installation devices,
said method being characterized by
- passing fluid through a duct in order to energize the installation devices.

2. Method according to claim 1, in which fluid and a cable are passed through the same duct or duct section.

3. Method according to claim 1, in which fluid and a cable are passed through separate ducts or duct sections.

4. Method according to claim 1, 2 or 3, wherein at least two cables are installed simultaneously.

5. Method according to any of the preceding claims, wherein at least one cable is provided with a shuttle.

6. Method according to any of the preceding claims, wherein a copper cable is installed.

7. Method according to any of the preceding claims, wherein a fibre optic cable is installed.

8. Method according to any of the preceding claims, wherein the fluid is compressed air.

9. Method according to any of the preceding claims, wherein a downstream end of the duct, with respect to the fluid transport direction, has an open exhaust.

10. Method according to any of the preceding claims, wherein a downstream end of the duct, with respect to the fluid transport direction, has an at least partially closed exhaust.

11. Device for installing cables, the device comprising propulsion means for propelling a cable, said propulsion means being arranged for being energized by means of pressurized fluid, said device further comprising bypass means for bypassing pressurized fluid to other devices.

12. System for installing cables, comprising a plurality of devices according to claim 11 and at least one source of pressurized fluid, the source preferably being a compressor.
